# FASCICULE DE BREVET EUROPEEN

(11) **EP 1 013 716 B1**
(45) Date de publication et mention de la délivrance du brevet: **06.03.2002**
(21) Numéro de dépôt: 99440372.3
(22) Date de dépôt: 23.12.1999
(51) Int. Cl.: C08L 95/00, C09D 195/00, C09J 195/00, C08G 18/69, C08G 18/36, C08L 75/04, E04B 1/66

(54) **Composition résineuse monocomposante aux propriétés adhésives améliorées, notamment pour la réalisation d'étanchéités.**
Einkomponentige Harzzusammensetzung mit verbesserten Hafteigenschaften, ihre Verwendung in Dichtmassen
Monocomponent resin composition with improved adhesive properties, its use particulary in sealants

(30) Priorité: 24.12.1998 FR 9816602
(43) Date de publication de la demande: 28.06.2000
(73) Titulaire: SOPREMA S.A., 67100 Strasbourg (FR)
(72) Inventeur: Durot, Louis, 75012 Paris (FR); Bindschedler, Pierre Etienne, 97210 Obernai (FR)
(74) Mandataire: Nuss, Pierre

(56) Documents cités:
- DE-A- 4 408 154
- GB-A- 2 242 435
- US-A- 3 980 597
- US-A- 4 871 792

## Description

La présente invention concerne le domaine du bâtiment, des travaux publics et du génie civil, en particulier l'étanchéité des ouvrages, et a pour objet une composition résineuse aux propriétés adhésives améliorées, ainsi que son utilisation, en particulier pour des travaux d'étanchéité.

Les étanchéités dans le bâtiment et les travaux publics sont souvent réalisées, notamment pour les surfaces planes horizontales, au moyen de membranes ou de feuilles bitumineuses fixées sur le support par fusion partielle de leur sous-face pour obtenir une adhérence intime et résistante.

Toutefois, la mise en oeuvre des chalumeaux ou appareils de chauffage analogues dans certaines zones des surfaces à recouvrir à proximité d'ouvertures pouvant transmettre les flammes, d'éléments inflammables ou encore de décrochements peut présenter des risques de débuts d'incendie lors de l'application de la flamme ou, plus grave encore, des risques d'incendie postérieur aux travaux, par réactivation de la combustion de matériaux à combustion lente ayant été en contact avec la flamme, tel que par exemple des matériaux d'isolation thermique, souvent cachés et recouverts par d'autres matériaux moins sensibles à la chaleur.

On connaît, bien entendu, également des feuilles d'étanchéité à sous-face auto-adhésive à froid, toutefois elles sont fastidieuses à mettre en place au niveau des décrochements et ne font pas état d'une adhérence suffisamment importante pour fournir un contact intime surfacique et une fixation résistante dans le temps, surtout sur les surfaces inclinées ou verticales.

Il existe également des produits d'étanchéité liquides ou visqueux, notamment à base de bitume, pouvant être appliqués, aisément, à la spatule, au pinceau ou à la brosse, notamment en des endroits où l'installation des feuilles est fastidieuse.

Néanmoins ces produits liquides ou visqueux présentent souvent une élasticité insuffisante pour résister sans dommage aux mouvements ou aux déformations du support, une étanchéité non stable au cours du temps, une mauvaise résistance aux UV et, surtout, une adhésivité insuffisante pour assurer un accrochage suffisamment intime, résistant et durable sur des supports différents, notamment sur des supports inclinés ou verticaux.

Il est ainsi souvent nécessaire pour mettre en oeuvre ces produits liquides ou visqueux connus de prévoir un primaire d'adhérence et/ou une couche de protection spécifique supplémentaires.

Enfin, on connaît déjà des produits d'étanchéité liquides sous forme de mélanges bitume / polyuréthanne, intégrant des quantités importantes de plastifiants, généralement sous forme d'huiles aromatiques, et/ou de charge ou de diluant liquide.

Toutefois, ces produits, décrits par exemple dans les documents US-A-5 319 008 et US-A-4 871 792, présentent notamment une durée de vie limitée, le ou les bitumes supports étant attaqués par l'huile, et cette dernière, ainsi que la charge ou le diluant liquide, affaiblissent les prépolymères de polyuréthanne utilisés dans ces produits, générant des micro-fissures dans la couche de produit appliquée à relativement brève échéance.

En outre, ces produits connus font état d'une intensité d'accrochage limitée, nécessitent impérativement une protection spécifique contre les UV et présentent une relativement faible résistance aux agressions chimiques résultant des agents atmosphériques, rendant aléatoire leur utilisation sur des sites extérieurs ou exposés, excluant a fortiori une tenue décennale en extérieur et limitant leur utilisation à des applications en sites protégés.

De plus, la présence de quantités importantes de plastifiants et de diluants, par rapport à la quantité de bitume, résulte en un coût de revient élevé.

Enfin, ces mélanges bitume / polyuréthanne connus ne se présentent pas et ne peuvent pas se présenter sous une forme monocomposante, qui faciliterait grandement leur utilisation, en particulier sur chantier.

Par le document EP-A-0 957 134, on connaît en outre un matériau de tapis comprenant une feuille de support primaire et une couche de support intégrant une composition à base d'un mélange bitume / polymère de polyuréthanne.

Cette composition est formée en une seule opération en mélangeant un composé bitumineux, un hydrocarbure diène et un polyisocyanate, et en chauffant le mélange résultant. Cette composition est de ce fait totalement inadaptée pour une mise en oeuvre sur chantier.

De plus les polyols utilisés pour la composition de ce document présentent une fonctionnalité hydroxyle sensiblement supérieure à 2 et de ce fait le polymère de polyuréthanne obtenu à partir de ce type de polyols présentera nécessairement un coefficient de fonctionnalité largement supérieur à 2.

Il en résulte pour la composition intégrant ce polymère une limitation de certaines propriétés, notamment de la stabilité, de la faculté d'allongement, de la résistance aux U.V. et des caractéristiques d'adhérence.

La présente invention a notamment pour but de pallier les inconvénients précités, de surmonter les limitations précitées, et de proposer un produit du type bitume / polyuréthanne, facile d'utilisation et de mise en oeuvre, tolérant une forte proportion de mélange bitumineux dans sa composition, présentant une tenue et une résistance performantes et durables en application extérieure non protégée et ne nécessitant aucun primaire d'adhérence, quelle que soit la nature du support d'application.

A cet effet, elle a pour objet une composition résineuse monocomposante aux propriétés adhésives améliorées, à base d'un mélange bitume / prépolymère de polyuréthanne et destinée à constituer une couche d'étanchéité ou une partie d'une couche d'étanchéité, caractérisée en ce que les molécules de prépolymère de polyuréthanne comportent au moins un segment ou groupement comprenant au moins 30 atomes de carbone purement hydrogénés et en ce qu'elles présentent une chaîne polymérique à structure sensiblement linéaire.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en élévation latérale et en coupe de l'application de la composition résineuse au niveau d'un décrochement ou d'un relief, selon une première variante de réalisation de l'invention, et,
la figure 2 est une vue en élévation latérale et en coupe de l'application de la composition résineuse au niveau d'un décrochement ou d'un relief, selon une seconde variante de réalisation de l'invention.

Conformément à l'invention, la composition résineuse monocomposante à propriétés adhésives, à base d'un mélange bitume / prépolymère de polyuréthanne, est caractérisée en ce que les molécules de prépolymère de polyuréthanne comportent au moins un segment ou groupement comprenant au moins 30 atomes de carbone purement hydrogénés, et présentent une chaîne polymérique à structure sensiblement linéaire.

Selon un premier mode de réalisation de l'invention, les molécules de prépolymère de polyuréthanne présentent une chaîne polymérique totalement hydrocarbonée.

Selon un second mode de réalisation de l'invention, les molécules de prépolymère de polyuréthanne sont formées par des successions d'au moins deux segments hydrocarbonés non polaires du type (CₙHₚ)_{m,} avec m ≥ 30.

Cette composition résineuse pourra, par exemple, être principalement composée de 45 à 90 % en poids d'un mélange bitumineux, éventuellement chargé, de 10 à 55 % en poids de prépolymère de polyuréthanne et d'une quantité suffisante d'un catalyseur adapté, le rapport pondéral mélange bitumineux / prépolymère étant préférentiellement supérieur à 1,5.

Selon un mode de réalisation non limitatif de l'invention, ladite composition résineuse pourra être plus précisément composée de 50 à 85 %, préférentiellement de 70 à 80 %, en poids d'un mélange bitumineux chargé, de 15 à 50 %, préférentiellement de 15 à 25 %, en poids d'un mélange précurseur de polyuréthanne, formé principalement d'un prépolymère basé sur des chaînes polyol hydrocarboné (tel que par exemple poly-butadiène hydroxylé linéaire ou poly-butadiène acrylonitryl hydroxylé du type HYCAR), de 0,01 à 1 %, préférentiellement de 0,05 à 0,25 %, en poids d'un catalyseur adapté, de 0 à 10 %, préférentiellement de 0,5 à 3,0 %, en poids d'un solvant hydrocarboné, de 0 à 10 %, préférentiellement de 0,5 à 3,0 %, en poids d'un solvant polaire léger, de 0 à 5 %, préférentiellement de 1,0 à 3,5 %, en poids d'agents thixotropants et de 0 à 5 %, préférentiellement de 0,1 à 2,5 %, en poids d'une substance du type isocyanate, avantageusement du type diisocyanate, ou tout autre produit ou substance susceptible de réagir avec les sites du bitume (R-OH, R-NH-R, R-SH, ...).

Le mélange bitumineux chargé précité pourra être composé, à titre d'exemple, de 30 à 80 %, préférentiellement de 35 à 75 %, en poids de bitume, de 0 à 45 %, préférentiellement de 0 à 40 %, en poids de charge minérale et de 5 à 30 %, préférentiellement de 10 à 25 %, en poids d'un solvant pétrolier.

Le bitume utilisé pourra par exemple présenter un coefficient de pénétration à 20°C de 180 à 220 1/10ème mm et une température de ramollissement comprise entre 30 et 45°C.

Le solvant pétrolier, destiné à rendre le bitume maniable pour la fabrication du mélange bitumineux chargé, pourra être de l'essence (par exemple de l'essence F), ou encore des solvants aromatiques (Xylène, Toluène).

Le mélange bitumineux chargé peut, à titre accessoire, également comprendre, d'une part, entre 0 et 20 % en poids d'un pigment, par exemple TiO₂, et, d'autre part, entre 0 et 8 % d'un agent dessiccateur, préférentiellement minéral.

Un type de mélange bitumineux pouvant être mis en oeuvre dans le cadre de l'invention est, par exemple, celui connu sous la désignation Plastisol Bitume par la demanderesse.

Toutefois, en variante la réalisation du mélange bitumineux chargé peut être opérée au cours de la préparation de la composition résineuse lorsque l'on dispose de bitume fondu.

Le prépolymère de polyuréthanne en trop dans la composition résineuse selon l'invention pourra, par exemple, être obtenu en mélangeant les ingrédients suivants, avec les dosages pondéraux indiqués, à savoir :
- Isocyanante
   (par exemple TDI-Toluylène diisocyanate) 14,0 %
- Polyol de type ester d'acide gras dimère
   (par exemple du type 3197 de la société Unichema) 66,5 %
- Solvant hydrocarboné (par exemple du type Xylène) 10,5 %
- Solvant polaire (par exemple du type MEK) 9,0 %

Après mélange, ces ingrédients sont chauffés pendant environ deux heures à environ 80 °C (en présence de chlorure de benzoïle 1 à 2 ‰) pour obtenir le prépolymère de polyuréthanne.

On obtient ainsi une résine de base aliphatique polyol compatible avec des doses élevées de bitume, sans nécessiter une proportion élevée de plastifiant solvantant compatibilisant, du type esters gras de glycol gras, esters de di-acide hydrocarboné d'un glycol hydrocarboné, polydène hydroxylé (tel que le polyol HYCAR ou le polyol KRATON) ou polyesters d'acide gras dimer ou d'hexane diol.

A titre d'exemple pratique de réalisation, la composition résineuse selon l'invention pourra avantageusement présenter la composition pondérale suivante :
- Prépolymère de polyuréthanne obtenu de la manière décrite précédemment 17,6 %
- Plastisol BITUME 77,0 %
- MDI (Diphénylmétane diisocyanate) 0,5 %
- Solvant hydrocarboné 1,4 %
- Solvant polaire léger 1,4 %
- Catalyseur 0,1 %
- Thixotropants 2,0 %

Le solvant hydrocarboné pourra consister, par exemple, en un produit du même genre que le solvant pétrolier mentionné précédemment, ou éventuellement une huile compatible avec le bitume utilisé. Ce solvant, préférentiellement du toluène sert essentiellement à rendre le Plastisol BITUME compatible avec la résine polaire.

Le solvant polaire léger pourra consister, par exemple, en une substance de la famille des cétones (acétone, méthyléthylcétone, butyléthylcétone, ...), des esters d'acétate (acétate d'éthyle, acétate de butyle, ...) ou des esters-éthers de glycols (acétate de méthoxypropanol, ...). Ce solvant servira à fluidifier la résine et autorisera une diminution des quantités de solvants par un effet de synergie avec le solvant hydrocarboné.

Le catalyseur mis en oeuvre pourra être du type amine aliphatique ou aromatique (triéthylamine, DABCO, TMBDA, ...) ou du type organo-métallique (octoate d'étain, DBTL, ...), préférentiellement du DBTL.

Les substances thixotropantes peuvent consister en des thixotropants minéraux (bentones, silice pyrogénée, ...), des fibres organiques (polyéthylène, Kevlar [nom déposé], ...) ou analogues. Les thixotropants modifient les propriétés rhéologiques de la composition et évitent les coulures en application verticale tout en garantissant une fluidité suffisante pour permettre une manipulation aisée.

La composition résineuse obtenue selon l'exemple illustratif et non limitatif décrit précédemment, se présentant sous la forme d'une pâte thixotrope monocomposante de couleur brune, fait état des propriétés suivantes d'après les analyses effectuées par les inventeurs :
- Extrait sec (en masse) : 79 %
- Masse volumique à 25°C : 1300 kg/m³
- Masse volumique extrait sec : 1400 kg/m³
- Résistance à la rupture : 0,123 MPa
- Allongement à la rupture : 360 %
- Viscosité: 9200 +/- 1000 CP

En vue d'évaluer les propriétés d'adhérence de l'exemple illustratif de composition résineuse décrit précédemment, les inventeurs ont procédé à différents tests (1 à 3) dont les résultats sont résumés ci-après.

| 1) Pelage à 90° à la vitesse de 10 mm/min (N/5cm) | | | |
|---|---|---|---|
| Support | Béton | Tôle galvanisée | Bois |
| 7 jours de séchage | 85 | 65 | 25 |
| 7 jours dans l'eau + 20 jours de séchage | 110 | 75 | 25 |

| 2) Pelage à 90° à la vitesse de 10 mm/min de la résine appliquée sur différents surfaçages de membranes bitumineuses (N/5cm) | | | | | | |
|---|---|---|---|---|---|---|
| Surfaçage | Sablée | Ardoise | Aluminium | PEHD | Aluminium laqué | Bitume |
| 7 jours de séchage | 30 | 30 | 15 | 1 | 50 | 15 |
| 7 jours eau + 18 jours de séchage | 54 | 40 | 55 | 3 | 55 | 25 |
| 1 mois à 80°C | | 100 | | | | 35 |
| 2 mois à 80°C | | 100 | | | | 45 |
| PEHD = Polyéthylène haute densité | | | | | | |

| 3) Pelage à 90° à la vitesse de 10 mm/min sur profilé PVC | |
|---|---|
| | Résistance (N/5cm) |
| 7 jours de séchage | 15 |
| 7 jours eau | 10 |
| 15 jours à 70°C | 30 |
| 1 mois à 70°C | 35 |

La composition résineuse précitée est préférentiellement conditionnée sous forme monocomposante intégrant l'ensemble des ingrédients dans un mélange visqueux unique, très facile d'utilisation, mais pourra éventuellement également être conditionnée sous forme bi-composante, voire tri-composante, à mélanger avant application, autorisant un stockage de plus longue durée.

La présente invention a également pour objet un procédé de réalisation d'un revêtement d'étanchéité en prolongement vertical, horizontal ou incliné d'un revêtement d'étanchéité existant traditionnel (feuilles préfabriquées bitumineuses ou synthétiques ou asphalte coulé), caractérisé en ce qu'il consiste à appliquer directement sur la surface support à recouvrir, sans application préalable d'un primaire, une ou plusieurs couches 4, 5 d'une composition résineuse monocomposante et à forte teneur en bitume telle que décrite ci-dessus, de manière à obtenir un revêtement étanche résistant aux agressions des agents atmosphériques et, notamment, aux UV, notamment sur une durée au moins décennale.

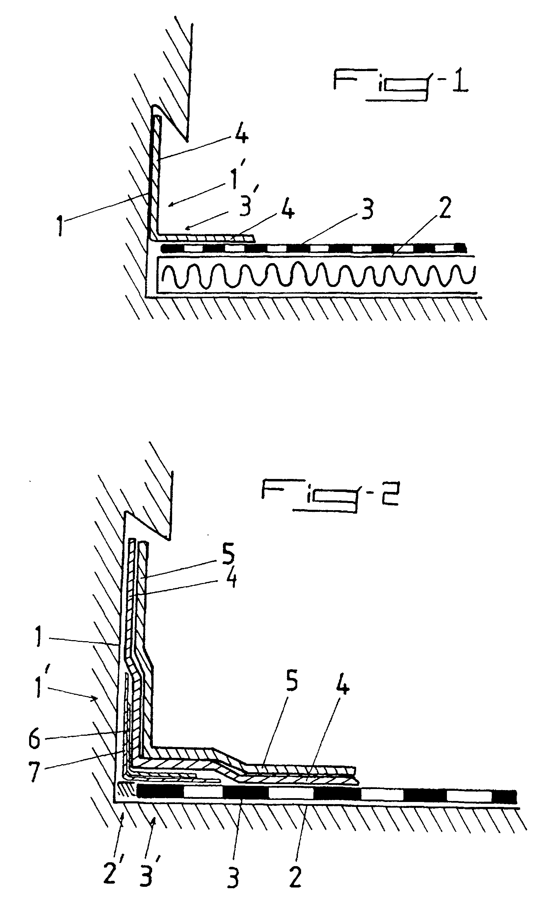

Comme le montrent les figures 1 et 2 des dessins annexés, la composition résineuse selon la présente invention peut, de manière particulièrement avantageuse, être mise en oeuvre dans le cadre d'un procédé de réalisation d'un revêtement d'étanchéité sur une portion de surface de support 1 verticale ou inclinée, raccordé à un revêtement d'étanchéité bitumineux 3 rapporté sur une surface support principale 2, contiguë à ladite portion de surface 1 support et inclinée par rapport à cette dernière.

Ce procédé pourra, par exemple, consister, après préparation des zones concernées, à appliquer une couche 4 de composition résineuse sur la portion de surface 1 à recouvrir ainsi que sur une bande de bordure 2', 3' du revêtement d'étanchéité 3 et, le cas échéant, de la surface support principale 2, adjacente à ladite portion de surface 1 à recouvrir, et, après assèchement au moins partiel de cette couche 4, à appliquer, le cas échéant, au moins une seconde couche 5 de composition résineuse de manière à recouvrir ladite première couche 4, de manière à obtenir un revêtement d'étanchéité résistant aux UV, adhérent directement sur la portion de surface 1, sans primaire, comportant une forte teneur en bitume et adhérant directement sur le revêtement bitumineux 3 sans l'altérer dans le temps et sans perte d'adhérence.

En cas d'application en deux couches 4 et 5, la quantité de composition résineuse apportée avec la première couche 4 pourra, par exemple, correspondre à environ 600 à 800 g/m², préférentiellement environ 700 g/m², et la quantité de composition résineuse apportée avec la seconde couche 5 pourra, par exemple, correspondre à environ 800 à 1000 g/m², préférentiellement à environ 900 g/m².

Selon une caractéristique supplémentaire de l'invention, représentée sur la figure 2 des dessins annexés, le procédé précité peut également consister, avant application de la première couche 4, à mettre en place une armature ou une nappe de renfort 6 sous forme de grille ou de non-tissé, couvrant en particulier les zones de bordures adjacentes 1' et 3', 4', d'une part, de la portion de surface à recourir 1 et. d'autre part, du revêtement d'étanchéité 3 et, le cas échéant, de la surface support principale 2, ladite armature ou nappe 6 étant fixée par collage au moyen de la composition résineuse, avant application de ladite première couche 4.

La composition selon l'invention pourra, selon un premier mode d'application, être utilisée pour réaliser un revêtement d'étanchéité par application en une ou plusieurs couches sur un support, par exemple au moyen d'une brosse ou d'un rouleau.

Pour renforcer la cohésion structurelle du revêtement d'étanchéité ainsi obtenu, il peut être prévu de mettre en place une armature ou une nappe de renfort entre deux couches consécutives de composition résineuse, chaque couche étant, par exemple, constituée d'environ 0,5 kg/m² à 1,0 kg/m² de composition résineuse.

La composition résineuse pourra, dans le cadre de cette variante d'utilisation, constituée notamment un pare-vapeur, par exemple, sur support béton.

En vue d'augmenter la résistance aux intempéries et aux UV du produit d'étanchéité bitume / polyuréthanne obtenu par application de la composition selon l'invention, il peut être prévu que la couche supérieure de composition résineuse soit recouverte d'une couche protectrice de particules minérales, préférentiellement de paillettes d'ardoise.

Conformément à un deuxième mode d'application de l'invention, ladite composition pourra être également utilisée en tant qu'agent de collage étanche, notamment pour assembler entre elles deux feuilles ou membranes, en particulier bitumineuses, ou pour fixer une feuille ou une membrane sur un support, notamment non horizontal.

Grâce à l'invention, il est donc possible de fournir une composition résineuse applicable à froid et destinée à des applications d'étanchéité, permettant de palier l'ensemble des inconvénients mentionnés précédemment en regard des différents produits connus. Cette composition résineuse objet de la présente est facile d'utilisation du fait de sa composition monocomposante, fait notamment état d'une performance adhésive supérieure sur tous types de supports sans nécessiter de primaire d'adhérence et sans altérer le support et sans perte d'adhérence notable dans le temps avec ledit support, notamment lorsque ce dernier consiste en du ou est formé à base de bitume, d'une résistance élevée aux UV et aux agressions par les agents atmosphériques et d'un coût de revient faible du fait de la forte proportion de bitume et, le cas échéant, de charge.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Composition résineuse monocomposante aux propriétés adhésives améliorées, à base d'un mélange bitume / prépolymère de polyuréthanne et destinée à constituer une couche d'étanchéité ou une partie d'une couche d'étanchéité, **caractérisée en ce que** les molécules de prépolymère de polyuréthanne comportent au moins un segment ou groupement comprenant au moins 30 atomes de carbone purement hydrogénés et **en ce qu'**elles présentent une chaîne polymérique à structure sensiblement linéaire.

2. Composition selon la revendication 1, **caractérisée en ce que** les molécules de prépolymère de polyuréthanne présentent une chaîne polymérique totalement hydrocarbonée.

3. Composition selon la revendication 1, **caractérisée en ce que** les molécules de prépolymère de polyuréthanne sont formées par des successions d'au moins deux segments hydrocarbonés non polaires du type (Cₙ Hₚ) ₘ, avec m 30.

4. Composition selon l'une quelconque des revendications 1 à 3, **caractérisée en ce qu'**elle est principalement composée de 45 à 90 % en poids d'un mélange bitumineux, de 10 à 55 % en poids de prépolymère de polyuréthanne et d'une quantité suffisante d'un catalyseur adapté, le rapport pondéral mélange bitumineux / prépolymère étant préférentiellement supérieur à 1,5.

5. Procédé de réalisation d'un revêtement d'étanchéité en prolongement vertical, horizontal ou incliné d'un revêtement d'étanchéité existant traditionnel, **caractérisé en ce qu'**il consiste à appliquer directement sur la surface support à recouvrir, sans application préalable d'un primaire, une ou plusieurs couches (4, 5) d'une composition résineuse monocomposante et à forte teneur en bitume selon l'une quelconque des revendications 1 à 4, de manière à obtenir un revêtement étanche résistant aux agressions des agents atmosphériques et, notamment, aux UV.

6. Procédé de réalisation d'un revêtement d'étanchéité sur une portion de surface de support verticale ou inclinée, raccordé à un revêtement d'étanchéité bitumineux rapporté sur une surface support principale, contiguë à ladite portion de surface support et inclinée par rapport à cette dernière, **caractérisé en ce qu'**il consiste, après préparation des zones concernées, à appliquer une couche (4) de composition résineuse monocomposante selon l'une quelconque des revendications 1 à 4 sur la portion de surface (1) à recouvrir ainsi que sur une bande de bordure (2', 3') du revêtement d'étanchéité (3) et, le cas échéant, de la surface support principale (2), adjacente à ladite portion de surface (1) à recouvrir, et, après assèchement au moins partiel de cette couche (4), à appliquer, le cas échéant, au moins une seconde couche (5) de composition résineuse de manière à recouvrir ladite première couche (4), de manière à obtenir un revêtement d'étanchéité résistant aux UV, adhérent directement sur la portion de surface (1), sans primaire, comportant une forte teneur en bitume et adhérant directement sur le revêtement bitumineux (3) sans l'altérer dans le temps et sans perte d'adhérence.

7. Procédé selon la revendication 6, **caractérisé en ce qu'**il consiste, avant application de la première couche (4), à mettre en place une armature ou une nappe de renfort (6) sous forme de grille ou de non-tissé, couvrant en particulier les zones de bordures adjacentes (1' et 3', 4'), d'une part, de la portion de surface à recourir (1) et, d'autre part, du revêtement d'étanchéité (3) et, le cas échéant, de la surface support principale (2), ladite armature ou nappe (6) étant fixée par collage au moyen de la composition résineuse, avant application de ladite première couche (4).

8. Utilisation de la composition résineuse selon l'une quelconque des revendications 1 à 4 pour réaliser un revêtement d'étanchéité par application en une ou plusieurs couches sur un support, par exemple au moyen d'une brosse ou d'un rouleau et, le cas échéant, avec mise en place d'une armature ou d'une nappe de renfort entre deux couches.

9. Utilisation selon la revendication 8, **caractérisée en ce que** la couche supérieure de composition résineuse est recouverte d'une couche protectrice de particules minérales, préférentiellement de paillettes d'ardoise.

10. Utilisation de la composition résineuse selon l'une quelconque des revendications 1 à 4 en tant qu'agent de collage étanche, notamment pour assembler entre elles deux feuilles ou membranes, en particulier bitumineuses, ou pour fixer une feuille ou une membrane sur un support, notamment non horizontal.

## Patentansprüche

1. Zusammensetzung aus einkomponentigem Harz mit verbesserten Hafteigenschaften auf der Basis eines Bitumengemischs/Vorpolymer des Polyurethans zur Bildung eines Dichtungsbelags oder eines Teils einer Dichtung,
**dadurch gekennzeichnet,**
**dass** die Moleküle des Vorpolymers des Polyurethans mindestens einen Abschnitt oder eine Gruppierung aufweisen, der bzw. die mindestens 30 Atome reiner Kohlenwasserstoffe enthält, und dass sie eine Polymerkette mit einer im Wesentlichen linearer Struktur darstellen.

2. Zusammensetzung nach Anspruch 1,
**dadurch gekennzeichnet,**
**dass** die Moleküle des Vorpolymers des Polyurethans eine total aus Kohlenwasserstoffen bestehende Polymerkette bilden.

3. Zusammensetzung nach Anspruch 1,
**dadurch gekennzeichnet,**
**dass** die Moleküle des Vorpolymers des Polyurethans durch Aufeinanderfolgen von mindestens zwei nicht polaren Kohlenwasserstoffabschnitten des Typs (CₙHₚ)ₘ gebildet sind, wobei m≥30 ist.

4. Zusammensetzung nach einem der Ansprüche 1 bis 3,
**dadurch gekennzeichnet,**
**dass** sie hauptsächlich aus 45-90 Gew.-% eines Bitumengemischs, 10-55 Gew.-% des Vorpolymers des Polyurethans und einer genügenden Menge eines passenden Katalysators zusammengesetzt ist, wobei das Gewichtsverhältnis der Bitumenmischung zum Vorpolymer vorzugsweise über 1,5 liegt.

5. Verfahren zur Schaffung eines Dichtmantels in vertikaler, horizontaler oder geneigter Verlängerung einer üblichen Dichtung,
**dadurch gekennzeichnet,**
**dass** es darin besteht, dass ein oder mehrere Schichten einer Zusammensetzung aus einkomponentigem Harz ohne eine vorhergehende Anfangsanwendung direkt auf die zu bedeckende Stützfläche aufgebracht und dauerhaft im Bitumen gehalten wird, und zwar nach einem der Ansprüche 1 bis 4 in der Weise, dass eine dichte, gegen den Einfluss von atmosphärischen Erscheinungen, insbesondere der Ultraviolettstrahlung, widerstandsfähige Dichtung geschaffen wird.

6. Verfahren zur Schaffung eines Dichtmantels auf einem Teil einer vertikalen oder geneigten Stützfläche, wobei der Dichtmantel mit einer auf einer Hauptstützfläche aufgebrachten, bituminösen Dichtungsschicht verbunden ist, an diesen Teil der Stützfläche angrenzt und gegenüber diesem Teil geneigt ist,
**dadurch gekennzeichnet,**
**dass** es darin besteht, dass nach der Aufbereitung der betreffenden Zonen ein Belag (4) aus einer einkomponentigen Harzzusammensetzung nach einem der Ansprüche 1 bis 4 auf einen Teil der zu bedeckenden Fläche (1) sowie auf einen Rand (2', 3') des Dichtmantels (3) und gegebenenfalls auf dem Rand der Hauptstützfläche (2) aufgebracht wird, die an den genannten Teil der zu bedeckenden Fläche (1) angrenzt, und dass nach mindestens einer teilweisen Trocknung dieses Belags (4) gegebenenfalls mindestens ein den ersten Belag (4) bedeckender, zweiter Belag (5) einer Harzzusammensetzung derart aufgebracht wird, dass ein gegen Ultraviolettstrahlung widerstandsfähiger Dichtmantel erreicht wird, der direkt auf dem Teil der Fläche (1) haftet, ohne vorher eine starke Bindung im Bitumen zu finden, und der direkt auf dem bituminösen Dichtmantel (3) haftet, ohne sich mit der Zeit zu ändern und die Haftung zu verlieren.

7. Verfahren nach Anspruch 6,
**dadurch gekennzeichnet,**
**dass** es darin besteht, dass vor dem Aufbringen des ersten Belags (4) eine Armierung oder eine Verstärkungsschicht (6) in Form eines Gitters oder einer nicht textilen Schicht angeordnet wird, die insbesondere die angrenzenden Randzonnen (1' und 3', 4') bedeckt, nämlich einerseits den Teil der zu bedeckenden Fläche (1) und andrerseits den Dichtmantel (3) sowie gegebenenfalls die Hauptstützfläche (2), wobei die Armierung oder Verstärkungsschicht (6) vor dem Aufbringen des ersten Belags (4) durch Klebung mittels der Harzzusammensetzung befestigt wird.

8. Verwendung der Harzzusammensetzung nach einem der Ansprüche 1 bis 4 zur Schaffung eines Dichtmantels durch Aufbringen eines oder mehrerer Beläge auf einer Stütze, beispielsweise mittels eines Pinsels oder einer Rolle, und gegebenenfalls mit der Anordnung einer Armierung oder einer Verstärkungsschicht zwischen den beiden Belägen.

9. Verwendung nach Anspruch 8,
**dadurch gekennzeichnet,**
**dass** der oberste Belag der Harzzusammensetzung von einer Schutzschicht aus Mineralteilchen, insbesondere von Schieferblättchen, bedeckt ist.

10. Verwendung einer Harzzusammensetzung nach einem der Ansprüche 1 bis 4 in soweit, als das Klebemittel insbesondere für das Zusammenfügen von zwei insbesondere bituminösen Folien oder Membranen oder zum Befestigen einer Folie oder einer Menbran auf einer insbesondere nicht horizontalen Stütze dient.

## Claims

1. Monocomponent resin composition with improved adhesive properties, based on a bitumen/polyurethane prepolymer mixture and intended to consist of a sealing layer or a part of a sealing layer, **characterised in that** the polyurethane prepolymer molecules comprise at least one segment or grouping comprising at least 30 purely hydrogenised carbon atoms and **in that** they have a polymeric chain with a substantially linear structure.

2. Composition according to claim 1, **characterised in that** the polyurethane prepolymer molecules have a totally hydrocarbonic polymeric chain.

3. Composition according to claim 1, **characterised in that** the polyurethane prepolymer molecules are formed by successions of at least two non-polar hydrocarbonic segments of the type (CₙHₚ)m with m ≥ 30.

4. Composition according to any one of claims 1 to 3, **characterised in that** it is mainly composed of 45 to 90 wt.% of bituminous mixture, 10 to 55 wt.% of polyurethane prepolymer and an adequate quantity of a suitable catalyst, the weight ratio of bituminous mixture/prepolymer preferably being greater than 1.5.

5. Process for producing a sealing covering with vertical, horizontal or inclined extension of a conventional existing sealing covering, **characterised in that** it consists in directly applying onto the support surface to be covered, without prior application of a primer, one or more layers (4, 5) of a monocomponent resin composition with a high bitumen content according to any one of claims 1 to 4, so as to obtain a sealed covering which is resistant to the stresses of atmospheric agents and, in particular UV.

6. Process for producing a sealing covering on a portion of vertical or inclined support surface, connected to a bituminous sealing covering connected on a main support surface which is adjacent to said portion of support surface and is inclined relative to the latter, **characterised in that** it consists, after preparation of the relevant zones, in applying a layer (4) of monocomponent resin composition according to any one of claims 1 to 4 on the surface portion (1) to be covered and on an edge strip (2', 3') of the sealing covering (3) and, if necessary, of the main support surface (2), adjoining said surface portion (1) to be covered, and, after at least partial drying of this layer (4), in applying, if necessary, at least a second layer (5) of resin composition so as to cover said first layer (4), so as to obtain a sealing covering which is resistant to UV, adhering directly on the surface portion (1), without primer, comprising a high bitumen content and adhering directly on the bituminous covering (3) without changing over time and without losing adhesion.

7. Process according to claim 6, **characterised in that** it consists, prior to applying the first layer (4), in positioning a frame or a reinforcement cover (6) in the form of a grid or a non-woven fabric, which covers in particular the adjoining edge zones (1' and 3', 4'), on the one hand, of the surface portion to be covered (1) and, on the other hand, of the sealing covering (3) and, if necessary, of the main support surface (2), said frame or cover (6) being fixed by bonding by means of the resin composition, before application of said first layer (4).

8. Use of the resin composition according to any one of claims 1 to 4 for producing a sealing covering by applying in one or more layers on a support, for example by means of a brush or a roller and, if necessary, with positioning of a frame or a reinforcing cover between two layers.

9. Use according to claim 8, **characterised in that** the upper layer of resin composition is covered by a protective layer of mineral particles, preferably slate cladding.

10. Use of the resin composition according to any one of claims 1 to 4 as a sealing bonding agent, in particular for assembling together two sheets or membranes, in particular bituminous, or for fixing a sheet or a membrane on a support, which is in particular not horizontal.
